(19) Europäisches Patentamt

European Patent Office

Office européen des brevets

(11) **EP 0 900 256 B1**

(12) **FASCICULE DE BREVET EUROPEEN**

(45) Date de publication et mention
de la délivrance du brevet:
**07.11.2001 Bulletin 2001/45**

(51) Int Cl.[7]: **C09C 3/06**, C09C 1/02,
A01N 25/26

(21) Numéro de dépôt: **97920802.2**

(22) Date de dépôt: **22.04.1997**

(86) Numéro de dépôt international:
**PCT/FR97/00720**

(87) Numéro de publication internationale:
**WO 97/40106 (30.10.1997 Gazette 1997/46)**

(54) **PREPARATION DE PARTICULES COMPRENANT UN COEUR ET UNE ECORCE DE SILICE**

HERSTELLUNG VON TEILCHEN ENTHALTEND KERN UND UMHÜLLUNG AUS KIESELSÄURE

METHOD FOR PREPARING PARTICLES COMPRISING A CORE AND A SILICA SHELL

(84) Etats contractants désignés:
**BE DE ES FI FR GB NL**

(30) Priorité: **22.04.1996 FR 9605134**

(43) Date de publication de la demande:
**10.03.1999 Bulletin 1999/10**

(73) Titulaire: **RHODIA CHIMIE**
**92408 Courbevoie Cédex (FR)**

(72) Inventeur: **AMICHE, Frédéric**
**F-92420 Vaucresson (FR)**

(74) Mandataire: **Fabre, Madeleine-France et al**
**Rhodia Services,**
**Direction de la Propriété Industrielle,**
**40, rue de la Haie-Coq**
**93306 Aubervilliers Cedex (FR)**

(56) Documents cités:
**US-A- 2 885 366        US-A- 2 913 419**

**Description**

La présente invention a pour objet un procédé de préparation de particules comprenant une écorce de silice dense et un coeur constitué d'un support en un matériau autre que de la silice, par précipitation sur ledit coeur, de silice active à partir d'une solution aqueuse de silicate de métal alcalin. Elle a également pour objet, à titre de produits industriels nouveaux, des particules composites constituées d'une écorce formée de silice dense et d'un coeur en un matériau organique non polymère à activité biologique. Les particules obtenues selon le procédé de l'invention peuvent être utilisées comme charges pour caoutchouc, polymères, bétons, papiers, ou comme véhicules de matières actives ou principes actifs solides, notamment à activité biologique, constituant le coeur ou incluses dans le coeur, avec libération rapide ou lente de la matière active ou du principe actif par destruction de l'écorce par action mécanique ou chimique ou par diffusion.

Il est connu de préparer des particules hétérogènes constituées d'une écorce de silice dense déposée sur un coeur constitué d'une charge autre que de la silice, par précipitation généralement lente de silice active sur ledit coeur, à partir d'une solution aqueuse de silicate de métal alcalin avec réglage du pH à l'aide d'un acide (US-A-2,885,366). Selon ce document, l'opération de précipitation est effectuée à un pH de préférence de 8 à 11 et une température de 80 à 100°C, après mise en oeuvre éventuelle d'un pied de cuve de faible force ionique (eau et sulfate de sodium), à l'aide d'une solution peu concentrée de silicate de métal alcalin, avec une vitesse d'ajout de silicate, pour une quantité de sulfate de sodium inférieure à 0,1 N , inférieure à un certain paramètre S (exprimé en masse de silice à ajouter par heure, par rapport à la masse de coeur à enrober) défini par l'équation suivante

$$S = (A/200) \, 2^n$$

- $\underline{n}$ étant égal à (T-90) / 10
- $\underline{A}$ représentant la surface spécifique, exprimée en m²/g, du support à enrober
- et T la température en °C,

sous peine de voir la formation de nuclei de particules denses de silice.

Selon cette équation, l'opération de précipitation de la silice active est longue ; ainsi, le dépôt de l'ordre de 20 parties en masse de silice sur 100 parties en masse de carbonate de calcium à une température de l'ordre de 80 à 90°C, nécessite entre 3 et 5 heures de réaction de précipitation.

La demanderesse a trouvé un nouveau procédé permettant de précipiter rapidement de la silice active dense sur un coeur constitué d'une charge différente de la silice, sans risque de formation de nuclei de particules de silice.

On entend, d'une manière simplifiée, comme "dense", une écorce de silice formée d'une couche continue constituée d'un réseau de silice, en opposition à une couche constituée d'un assemblage poreux de particules élémentaires de silice.

La présente invention consiste donc en un procédé de préparation de particules comprenant une écorce de silice dense, par précipitation de silice active à partir d'une solution aqueuse de silicate de métal alcalin M, de rapport $SiO_2/M_2O$ de 2 au moins, de préférence de l'ordre de 2,5 à 4, avec réglage du pH à l'aide d'un agent acidifiant, sur un support en un matériau autre que la silice, séparation de la bouillie de silice formée et séchage de la suspension de silice récupérée, l'opération de formation de bouillie de silice par précipitation étant réalisée selon les étapes suivantes :

- une première étape consistant à mettre en oeuvre un pied de cuve initial de pH de l'ordre de 8 à 10, comprenant de l'eau, au moins un support organique ou inorganique différent de la silice, insoluble dans l'eau dans les conditions de pH et de température de l'opération de formation de bouillie, un sel électrolyte du groupe des métaux alcalins et éventuellement un agent basique ou tampon, à une température de l'ordre de 80 à 98°C

- une deuxième étape consistant à introduire dans ledit pied de cuve, le silicate de métal alcalin sous forme d'une solution aqueuse et l'agent acidifiant, le milieu réactionnel présentant un pH sensiblement constant de l'ordre de 8 à 10 et étant maintenu à une température de l'ordre de 80 à 98°C, et ce jusqu'à ce que la quantité désirée de silice active soit formée, ledit procédé étant caractérisé en ce que:

- * la quantité d'électrolyte présente dans ledit pied de cuve à la première étape est d'au moins environ 0,4 mole, de préférence de l'ordre de 0,4 à 1,5 mole d'ion métal alcalin par litre de pied de cuve,
- * la solution de silicate de métal alcalin mise en oeuvre à la deuxième étape contient au moins environ 100 grammes de $SiO_2$ /litre, de préférence de l'ordre de 100 à 330 grammes de $SiO_2$ / litre,
- * et en ce que ladite deuxième étape est réalisée dans des conditions telles que la cinétique C de formation de silice active, exprimée en grammes de silice / heure / gramme de support, corresponde à une valeur

$$C \geq 3 \, (A/200) \, 2^n,$$

de préférence $C \geq 4 \, (A/200) \, 2^n$

et tout particulièrement $C \geq 6 \, (A/200) \, 2^n$

- $\underline{n}$ étant égal à $(T-90)/10$
- $\underline{A}$ représentant la surface spécifique, exprimée en $m^2/g$, du support à enrober
- et T la température en °C.

Le choix du silicate et de l'agent acidifiant pour réaliser le procédé de l'invention, se fait d'une manière bien connue en soi.
Le silicate de métal alcalin est avantageusement un silicate de sodium ou de potassium. On peut citer tout particulièrement les silicates de sodium.

On utilise généralement comme agent acidifiant un acide minéral tel que l'acide sulfurique, l'acide nitrique, l'acide chlorhydrique ou un acide organique comme l'acide acétique, l'acide formique ou l'acide carbonique. D'une manière préférentielle, il s'agit de l'acide sulfurique. Ce dernier peut être mis en oeuvre sous forme dilué ou concentré, de préférence sous forme d'une solution aqueuse présentant une concentration de l'ordre de 60 à 400 g/l. S'il s'agit d'acide carbonique, celui-ci peut être introduit sous forme gazeuse.

Parmi les matériaux pouvant constituer le support, pour la réalisation du procédé de l'invention, on peut mentionner tout composé inerte vis-à-vis de la silice active (silice hydroxylée), insoluble dans l'eau dans les conditions de pH et de température de l'opération de formation de bouillie, de forme quelconque (sphérique, aciculaire ...), solide ou liquide, minéral ou organique. D'une manière préférentielle, ledit matériau est sous forme solide.
On entend par "composé inerte vis-à-vis de la silice" tout composé restant stable dans les conditions de précipitation de la silice.
On entend par "composé insoluble dans l'eau", tout composé présentant une solubilité dans l'eau inférieure à environ 0,5% en poids à 25°C.

Comme exemple de matériaux, on peut mentionner:

- des sels inorganiques solides de métaux comme le carbonate de calcium, le carbonate de zirconium, le carbonate de baryum, le carbonate de plomb, le sulfure de zinc, le chlorure d'argent, le sulfate de baryum, le phosphate d'aluminium, le phosphate de titane ...
- des poudres de métaux, telles que des poudres de fer, nickel, aluminium, cuivre ...
- des oxydes ou hydroxydes solides de métaux tels que les oxydes d'aluminium, de chrome, de fer, de titane, de zirconium, de zinc, de titane, de cobalt, l'hydroxyde de nickel ...
- des silicates solides naturels ou synthétiques tels que les silicates de magnésium, aluminium, zinc ... , kaolin, attapulgite, bentonite, mica ... fibre de verre ...

- des silicates solides poreux (bentonite, attapulgite ...) contenant une matière active stable et insoluble dans l'eau dans les conditions de pH et de température de l'opération de formation de bouillie ; comme exemple de matières actives, on peut citer celles à activité biologique (pharmaceutique, phytosanitaire ...)
- des polymères organiques solides comme les polyéthylènes, les polyesters ...
- des matériaux organiques non polymères solides, cristallisés ou non, à activité biologique (pharmaceutique, phytosanitaire,...)

Le support mis en oeuvre peut être de taille quelconque selon les applications recherchées, par exemple de l'ordre de 20nm à 30μm, de préférence de l'ordre de 50nm à 20μm.

Parmi les électrolytes on peut citer notamment le sel du métal de silicate de départ et de l'agent acidifiant ; de préférence il s'agit de sulfate de sodium ; toutefois du chlorure, nitrate ou hydrogénocarbonate de sodium peut être préféré si la présence d'ions sulfates résiduels n'est pas désirée.

La première étape consiste à préparer le pied de cuve initial.

Si le support mis en oeuvre est un matériau solide, celui-ci peut être introduit tel quel ou de préférence sous forme d'une dispersion aqueuse. S'il s'agit d'un liquide, celui-ci est de préférence mis en oeuvre sous forme d'un émulsion aqueuse.

La quantité de support pouvant être mise en oeuvre est telle que le pied de cuve formé contienne de l'ordre d'au moins 10% de son poids de support solide, ou de l'ordre d'au moins 10% de son volume de support liquide ; ledit pied de cuve peut généralement contenir jusqu'à 50% de son poids ou de son volume de support solide ou liquide.

Un agent basique ou tampon peut être mis en oeuvre dans le pied de cuve initial pour assurer un pH dudit pied de cuve de l'ordre de 8 à 10.
On peut citer comme agent basique ou tampon, les hydroxydes de métaux alcalins comme l'hydroxyde de sodium, les silicates de métaux alcalins en solution, les phosphates de métaux alcalins, les hydrogénocarbonates de métaux alcalins ...

Le pied de cuve obtenu est porté à une température de l'ordre 80 à 98°C.

La deuxième étape consiste à ajouter au pied de cuve maintenu sous agitation, la solution de silicate et l'agent acidifiant simultanément.
Les quantités respectives de silicate de métal alcalin et d'agent acidifiant sont choisies de manière à obtenir la cinétique C de formation de silice active mentionnée ci-dessus et de manière à maintenir le pH du milieu réactionnel à une valeur sensiblement constante de l'ordre de 8 à 10 pendant toute l'introduction des deux réactifs. Ces deux solutions sont introduites en maintenant le milieu à une température de l'ordre de 80 à 98°C.

On arrête l'introduction de la solution de silicate lorsque la quantité désirée de silice est formée. La quantité minimum recherchée de silice est celle correspondant à un dépot de l'ordre de 1 à 150 parties en poids de $SiO_2$ pour 100 parties en poids de support.

Cette deuxième étape dure généralement de l'ordre de 30 minutes à 2 heures.

Le pH du milieu obtenu en fin de deuxième étape, après arrêt de l'introduction des réactifs, est ensuite amené, si nécessaire, à une valeur inférieure à 7, de préférence de l'ordre de 4 à 5.

Le milieu obtenu en fin de deuxième étape, après arrêt de l'introduction des réactifs, est éventuellement laissé mûrir pendant environ 10 à 30 minutes dans les mêmes conditions de température. Cette opération éventuelle de mûrissement peut être réalisée soit avant soit après avoir amené le pH du milieu à une valeur inférieure à 7, de préférence de l'ordre de 4 à 5, si cette rectification de pH est nécessaire.

On obtient à l'issue des opérations ci-dessus décrites, une bouillie de silice, qui est ensuite séparée (séparation liquide-solide) ; cette opération consiste généralement en une filtration (par exemple décantation, utilisation d'un filtre rotatif sous vide), suivie d'un lavage à l'eau.

La suspension de silice ainsi récupérée (gâteau de filtration) est ensuite séchée (étuve, four, atomisation).

Les particules ainsi obtenues peuvent présenter une épaisseur d'écorce de silice dense de l'ordre de 2 à 200 nm, de préférence de l'ordre de 5 à 50nm pour une taille de coeur de support de l'ordre de 20nm à 30μm, de préférence de l'ordre de 50nm à 20μm.

Le procédé faisant l'objet de l'invention, est bien adapté à la préparation de particules de silice dense présentant une épaisseur d'écorce de l'ordre de 2 à 200nm, de préférence de l'ordre de 5 à 50nm, pour une taille de coeur de l'ordre de 20nm à 30μm, de préférence de l'ordre de 50nm à 20μm.

Il permet d'obtenir, selon l'application recherchée, aussi bien des particules dont l'écorce de silice dense est fragile et cassante par action mécanique, que des particules dont l'écorce de silice dense est résistante aux actions mécaniques.

Des particules dont l'écorce de silice dense est fragile mécaniquement peuvent présenter une épaisseur d'écorce inférieure à 20nm environ, de préférence inférieure à 10nm environ, notamment si la taille du coeur est supérieure à 10μm, tout particulièrement supérieure à 15μm.

Ces particules présentent généralement une surface BET de l'ordre de 0,1 à 200 $m^2/g$; celle-ci est fonction de la BET initiale du support.

La surface spécifique BET est déterminée selon la méthode de BRUNAUER - EMET - TELLER décrite dans "The journal of the American Chemical Society", Vol. 60, page 309, février 1938 et correspondant à la norme NFT 45007 (novembre 1987).

L'épaisseur de l'écorce est déterminée par microscopie électronique.

Selon une variante de réalisation de l'invention, l'écorce de silice des particules présentes dans la bouillie contient en outre des traces de cations polyvalents, tels que $Mg^{2+}$, $Ca^{2+}$, $Ba^{2+}$, $Pb^{2+}$ introduits de préférence sous forme de solution aqueuse au cours de l'opération de formation de bouillie à la première étape dans le pied de cuve ou à la deuxième étape pendant l'ajout simultané des réactifs.

La présence de traces de cations polyvalents éliminables dans une étape suivante, par exemple par l'action d'un acide (c'est le cas notamment de $Ca^{2+}$, ...), est tout particulièrement intéressante pour apporter de la microporosité à l'écorce de silice dense. En effet, une structure microporeuse de l'écorce de silice dense présente de l'intérêt pour un relargage ou une amélioration du relargage dans le temps par diffusion du matériau constituant le coeur au travers de l'écorce de silice dense.

Un deuxième objet de l'invention consiste, en tant que produits industriels nouveaux, en des particules composites constituées d'une écorce de silice dense précipitée et d'un coeur en un matériau organique non polymère solide, cristallisé ou non, à activité biologique (pharmaceutique, phytosanitaire ...) insoluble dans un milieu aqueux de pH de l'ordre de 8 à 10, à une température inférieure à 100°C, obtenues selon le procédé de l'invention.

Elles peuvent présenter une épaisseur d'écorce de silice dense de l'ordre de 2 à 200 nm, de préférence de l'ordre de 5 à 50nm pour une taille de coeur de support à activité biologique de l'ordre de 20nm à 30μm, de préférence de l'ordre de 50nm à 20μm. L'écorce de silice dense desdites particules composites peut tout aussi bien être fragile et cassante par action mécanique, que résistante aux actions mécaniques.

Les particules faisant l'objet de l'invention ou obtenues selon le procédé de l'invention, constituées d'une écorce de silice dense enrobant un coeur de support en un matériau autre que de la silice, peuvent avoir de multiples applications.

Des particules résistantes à l'action mécanique et dont le coeur est constitué d'un matériau solide de faible prix peuvent être utilisées comme charge pour caoutchouc ou polymères, charges pour bétons ou pour papiers ...

Des particules dont l'écorce est sensible à l'action mécanique ou chimique peuvent être utilisées telles quelles ou au sein d'une formulation solide ou liquide, comme véhicules de matières actives ou principes actifs solides, notamment à activité biologique (pharmaceutique, phytosanitaire ...), constituant le coeur ou inclus (es) dans le coeur, avec libération de la matière active ou du principe actif par destruction de l'écorce par action mécanique ou chimique.

Des particules résistantes à l'action mécanique peuvent également être utilisées pour la libération retard de matières actives ou principes actifs solides, à activité biologique, phytosanitaire notamment, constituant le coeur ou inclus(es) dans le coeur, par diffusion lente au travers de l'écorce de silice, cette diffusion pouvant éventuellement, si désiré, être accélérée par la présence de microporosité dans l'écorce de silice.

Les exemples suivants sont donnés à titre illustratif.

**Exemple1**

On prépare un pied de cuve, par introduction dans un réacteur de 15 litres, de 5 litres d'eau, de 0,43 mole/litre de pied de cuve, de sodium sous forme de sulfate de sodium, de 1500g de carbonate de calcium précipité (STURCAL H commercialisé par RHONE-POULENC, présentant une granulométrie de 11 μm, une surface spécifique BET de 4 m$^2$/g) et de silicate de sodium de rapport $SiO_2/Na_2O$ de 3,5 (solution aqueuse à 130g de $SiO_2$ par litre) en quantité correspondant à une concentration de 5g de $SiO_2$ par litre de pied de cuve. Le pied de cuve de pH 8,5 est porté à 90°C et maintenu sous agitation. On introduit ensuite simultanément

- une solution aqueuse de silicate de sodium de rapport $SiO_2/Na_2O$ de 3,5 dont la concentration est de 130g de $SiO_2$ par litre de solution,
- et une solution aqueuse d'acide sulfurique contenant 80g d'acide par litre, de façon à former 300g de silice en 50 minutes.

Après mûrissement pendant une vingtaine de minutes, la bouillie obtenue est filtrée ; le gâteau de filtration est lavé à l'eau puis séché par atomisation.

L'analyse du produit par microscopie électronique (MET) montre que l'épaisseur de la couche de silice déposée est de l'ordre de 20nm.

La surface BET des particules finales est de 3,2m$^2$/g.

La cinétique d'ajout du silicate de sodium a été de 0,24g$(SiO_2)$/h/g$(CaCO_3)$, contre 0,02g$(SiO_2)$/h/g$(CaCO_3)$ selon l'art antérieur (US-A-2,885,366).

**Exemple 2**

On prépare un pied de cuve, par introduction dans un réacteur de 15 litres, de 5 litres d'eau, de 0,43 mole/litre de pied de cuve, de sodium sous forme de sulfate de sodium, de 1150g de carbonate de calcium précipité (STURCAL H commercialisé par RHONE-POULENC, présentant une granulométrie de 11μm, une surface spécifique BET de 4 m$^2$/g) et de silicate de sodium de rapport $SiO_2/Na_2O$ de 3,5 (solution aqueuse à 130g de $SiO_2$ par litre) en quantité correspondant à une concentration de 2g de $SiO_2$ par litre de pied de cuve. Le pied de cuve de pH 9 est porté à 90°C et maintenu sous agitation.

On introduit ensuite simultanément

- une solution aqueuse de silicate de sodium de rapport $SiO_2/Na_2O$ de 3,5 dont la concentration est de 130g de $SiO_2$ par litre de solution,
- et du $CO_2$ gazeux, de façon à former 230g de silice en 90 minutes.

Après mûrissement pendant une dizaine de minutes, la bouillie obtenue est filtrée ; le gâteau de suspension est lavé à l'eau puis séché en étuve à 80°C.

L'analyse du produit par microscopie électronique (MET) montre que l'épaisseur de la couche de silice déposée est de l'ordre de 20nm.

La surface BET des particules finales est de 3,7m$^2$/g.

La cinétique d'ajout du silicate de sodium a été de 0,134g$(SiO_2)$/h/g$(CaCO_3)$, contre 0,02g$(SiO_2)$/h/g $(CaCO_3)$ selon l'art antérieur (US-A-2,885,366).

**Revendications**

1.  Procédé de préparation de particules comprenant une écorce de silice dense, par précipitation de silice active à partir d'une solution aqueuse de silicate de métal alcalin M, de rapport $SiO_2/M_2O$ de 2 au moins, de préférence de l'ordre de 2,5 à 4, avec réglage du pH à l'aide d'un agent acidifiant, sur un support en un matériau autre que la silice, séparation de la bouillie de silice formée et séchage de la suspension de silice récupérée, l'opération de formation de bouillie de silice par précipitation étant réalisée selon les étapes suivantes :

    - une première étape consistant à mettre en oeuvre un pied de cuve initial de pH de l'ordre de 8 à 10, comprenant de l'eau, au moins un support organique ou inorganique différent de la silice, insoluble dans l'eau dans les conditions de pH et de température de l'opération de formation de bouillie, un sel électrolyte du groupe des métaux alcalins et éventuellement un agent basique ou tampon, à une température de l'ordre de 80 à 98°C
    - une deuxième étape consistant à introduire dans ledit pied de cuve, le silicate de métal alcalin sous forme d'une solution aqueuse et l'agent acidifiant, le milieu réactionnel présentant un pH sensiblement constant de l'ordre de 8 à 10 et étant maintenu à une température de l'ordre de 80 à 98°C,
    et ce jusqu'à ce que la quantité désirée de silice active soit formée,
    ledit procédé étant <u>**caractérisé en ce que**</u>:

    * la quantité d'électrolyte présente dans ledit pied de cuve à la première étape est d'au moins environ 0,4 mole, de préférence de l'ordre de 0,4 à 1,5 mole d'ion métal alcalin par litre de pied de cuve,
    * la solution de silicate de métal alcalin mise en oeuvre à la deuxième étape contient au moins environ 100 grammes de $SiO_2$ / litre, de préférence de l'ordre de 100 à 330 grammes de $SiO_2$ / litre,

* et **en ce que** ladite deuxième étape est réalisée dans des conditions telles que la cinétique C de formation de silice active, exprimée en grammes de silice / heure / gramme de support, corresponde à une valeur

$$C \geq 3 \ (A/200) \ 2^n,$$

de préférence $C \geq 4 \ (A/200) \ 2^n$

et tout particulièrement $C \geq 6 \ (A/200) \ 2^n$

   . $n$ étant égal à $(T-90) / 10$
   . $A$ représentant la surface spécifique, exprimée en $m^2/g$, du support à enrober
   . et T la température en °C.

2. Procédé selon la revendication 1) **caractérisé en ce que** le silicate de métal alcalin est un silicate de sodium ou de potassium.

3. Procédé selon la revendication 1) ou 2) **caractérisé en ce que** l'agent acidifiant est un acide minéral ou organique.

4. Procédé selon la revendication 3) **caractérisé en ce que** l'agent acidifiant est de l'acide sulfurique, nitrique, chlorhydrique, acétique, formique ou carbonique.

5. Procédé selon la revendication 4) **caractérisé en ce que** l'agent acidifiant est du $CO_2$ gazeux ou de l'acide sulfurique, sous forme d'une solution aqueuse présentant une concentration de l'ordre de 60 à 400 g/l.

6. Procédé selon l'une quelconque des revendications précédentes, **caractérisé en ce que** le matériau constituant le support, est choisi parmi les sels inorganiques solides de métaux, les poudres de métaux, les oxydes ou hydroxydes solides de métaux, les silicates solides naturels ou synthétiques, les silicates solides poreux contenant une matière active stable et insoluble dans l'eau dans les conditions de pH et de température de l'opération de formation de bouillie, les polymères organiques solides, les matériaux organiques non polymères solides, cristallisés ou non, à activité biologique.

7. Procédé selon la revendication 6), **caractérisé en ce que** le matériau constituant le support est du carbonate de calcium ou un matériaux organique non polymère solides, cristallisé ou non, à activité biologique, phytosanitaire notamment.

8. Procédé selon l'une quelconque des revendications précédentes, **caractérisé en ce que** le matériau constituant le support présentent une forme quelconque et une taille de l'ordre de 20nm à 30$\mu$m, de préférence de l'ordre de 50nm à 20$\mu$m.

9. Procédé selon l'une quelconque des revendications précédentes, **caractérisé en ce que** l'électrolyte est du sulfate, chlorure, nitrate ou hydrogénocarbonate de sodium.

10. Procédé selon l'une quelconque des revendications précédentes, **caractérisé en ce que** le support est mis en oeuvre sous forme d'une dispersion aqueuse.

11. Procédé selon l'une quelconque des revendications précédentes, **caractérisé en ce que** la quantité de support pouvant être mise en oeuvre est telle que le pied de cuve formé contienne de l'ordre d'au moins 10% de son poids ou de son volume de support.

12. Procédé selon la revendication 11), **caractérisé en ce que** le pied de cuve contient jusqu'à 50% de son poids ou de son volume de support.

13. Procédé selon l'une quelconque des revendications précédentes, **caractérisé en ce que** la deuxième étape de formation de bouillie est réalisée par introduction simultanée de silicate de métal alcalin et d'agent acidifiant, jusqu'à la formation d'au moins 1 à 150 parties en poids de $SiO_2$ pour 100 parties en poids de support.

14. Particules de silice comprenant une écorce de silice active et un coeur constitué d'un support en un matériau autre que la silice, *obtenues selon le procédé faisant l'objet de l'une quelconque des revendications précédentes,* **caractérisées en ce qu'**elles présentent une épaisseur d'écorce de silice de l'ordre de 2 à 200 nm , de préférence de l'ordre de 5 à 50nm pour une taille de coeur de support de l'ordre de 20nm à 30$\mu$m, de préférence de l'ordre de 50nm à 20$\mu$m.

15. Particules composites selon la revendication 14), **caractérisées en ce qu'**elles présentent une épaisseur d'écorce de silice inférieure à 20nm environ, de préférence inférieure à 10nm environ.

16. Particules composites selon la revendication 15), **caractérisées en ce qu'**elles présentent une taille de coeur de support supérieure à 10$\mu$m environ, de préférence de supérieure à 15$\mu$m environ.

**17.** Particules composites selon la revendication 14), **caractérisées en ce qu'**elles sont constituées d'une écorce de silice dense précipitée et d'un coeur en un matériau organique non polymère solide, cristallisé ou non, à activité biologique, phytosanitaire notamment, insoluble dans un milieu aqueux de pH de l'ordre de 8 à 10, à une température inférieure à 100°C.

**18.** Utilisation des particules composites faisant l'objet de la revendication 17) , pour la libération retard dudit matériau organique non polymère solide à activité biologique, phytosanitaire notamment, par diffusion lente au travers de l'écorce de silice.

**Patentansprüche**

**1.** Verfahren zur Herstellung von Teilchen, umfassend eine Umhüllung aus dichtem Siliciumdioxid, durch Fällung von aktivem Siliciumdioxid aus einer wässrigen Lösung von Silikat des Alkalimetalls M mit einem Verhältnis $SiO_2/M_2O$ von mindestens 2, bevorzugt in der Größenordnung von 2,5 bis 4, unter Einstellung des pH-Werts mit Hilfe eines Ansäuerungsmittels, auf einen Träger aus einem Material außer Siliciumdioxid, Abtrennen der gebildeten Siliciumdioxidaufschlämmung und Trocknen der Suspension des gewonnenen Siliciumdioxids, wobei der Arbeitsschritt der Bildung der Siliciumdioxidaufschlämmung durch Fällung gemäß den folgenden Stufen durchgeführt wird:

- eine erste Stufe, bei der man einen Anfangsansatz mit einem pH-Wert im Bereich von 8 bis 10, umfassend Wasser, mindestens einen organischen oder anorganischen Träger, der sich von Siliciumdioxid unterscheidet und in Wasser unter den Bedingungen des pH-Werts und der Temperatur des Arbeitsschrittes der Bildung der Aufschlämmung unlöslich ist, ein Elektrolytsalz der Alkalimetallgruppe und gegebenenfalls ein basisches Mittel oder ein Puffermittel, bei einer Temperatur im Bereich von 80 bis 98°C einsetzt;

- eine zweite Stufe, bei der man in den Ansatz, das Alkalimetallsilicat in Form einer wässrigen Lösung und das Ansäuerungsmittel zugibt, wobei das Reaktionsmedium einen im wesentlichen konstanten pH-Wert im Bereich von 8 bis 10 besitzt und bei einer Temperatur im Bereich von 80 bis 98°C gehalten wird,

und solange fortfährt, bis die gewünschte Menge an aktivem Siliciumdioxid gebildet ist,

**dadurch gekennzeichnet, dass**

- die Menge an Elektrolyt in dem Ansatz in der ersten Stufe mindestens etwa 0,4 mol, bevorzugt etwa 0,4 bis 1,5 mol, Alkalimetallion pro Liter Ansatz beträgt,
- die Lösung an Alkalimetallsilicat, die in der zweiten Stufe eingesetzt wurde, mindestens etwa 100 g $SiO_2$/Liter, bevorzugt etwa 100 bis 330 Gramm $SiO_2$/Liter enthält,
- und dass die zweite Stufe unter Bedingungen durchgeführt wird, dass die Kinetik C der Bildung von aktivem Siliciumdioxid, ausgedrückt in Gramm Siliciumdioxid/Stunde/Gramm Träger, einem Wert von $C \geq 3 (A/200)2^n$, bevorzugt $C \geq 4 (A/200)2^n$ und ganz besonders $C \geq 6 (A/200)2^n$ entspricht, wobei

  . $n (T-90)/10$ bedeutet,
  . A die spezifische Oberfläche, ausgedrückt in $m^2/g$, des zu umhüllenden Trägers, bedeutet
  . und T die Temperatur in °C beträgt.

**2.** Verfahren nach Anspruch 1, **dadurch gekennzeichnet, dass** das Alkalimetallsilicat ein Natrium- oder Kaliumsilicat ist.

**3.** Verfahren nach Anspruch 1 oder 2, **dadurch gekennzeichnet, dass** das Ansäuerungsmittel eine mineralische oder organische Säure ist.

**4.** Verfahren nach Anspruch 3, **dadurch gekennzeichnet, dass** das Ansäuerungsmittel Schwefelsäure, Salpetersäure, Salzsäure, Essigsäure, Ameisensäure oder Kohlensäure ist.

**5.** Verfahren nach Anspruch 4, **dadurch gekennzeichnet, dass** das Ansäuerungsmittel gasförmiges $CO_2$ oder Schwefelsäure in Form einer wässrigen Lösung mit einer Konzentration im Bereich von 60 bis 400 g/l ist.

**6.** Verfahren nach einem der vorstehenden Ansprüche, **dadurch gekennzeichnet, dass** das Material, das den Träger darstellt, aus festen anorganischen Metallsalzen, Metallpulvern, festen Metalloxiden oder -hydroxiden, natürlichen oder synthetischen festen Silicaten, festen porösen Silicaten mit einem Gehalt an einem stabilen aktiven Material, das unlöslich ist in Wasser unter den Bedingungen des pH-Werts und der Temperatur der Bildung der Aufschlämmung, festen organischen Polymeren, festen, kristallinen oder nicht-kristallinen, nicht-polymeren organischen Materialien mit biologischer Aktivität ausgewählt ist.

**7.** Verfahren nach Anspruch 6, **dadurch gekenn-**

**zeichnet, dass** das Material, das den Träger bildet, Calciumcarbonat oder ein festes, kristallines oder nicht-kristallines, nicht-polymeres organisches Material mit biologischer, insbesondere phytosanitärer Aktivität ist.

8. Verfahren nach einem der vorstehenden Ansprüche, **dadurch gekennzeichnet, dass** das Material, das den Träger bildet, eine beliebige Form und eine Größe im Bereich von 20 nm bis 30 μm, bevorzugt im Bereich von 50 nm bis 20 μ m, besitzt.

9. Verfahren nach einem der vorstehenden Ansprüche, **dadurch gekennzeichnet, dass** der Elektrolyt Natriumsulfat, -chlorid, -nitrat oder -hydrogencarbonat ist.

10. Verfahren nach einem der vorstehenden Ansprüche, **dadurch gekennzeichnet, dass** der Träger in Form einer wässrigen Dispersion eingesetzt wird.

11. Verfahren nach einem der vorstehenden Ansprüche, **dadurch gekennzeichnet, dass** die Menge des Trägers, die eingesetzt werden kann, so ist, dass der gebildete Ansatz mindestens etwa 10% seines Gewichts oder seines Volumens an Träger enthält.

12. Verfahren nach Anspruch 11, **dadurch gekennzeichnet, dass** der Ansatz bis zu 50% seines Gewichts oder seines Volumens an Träger enthält.

13. Verfahren nach einem der vorstehenden Ansprüche, **dadurch gekennzeichnet, dass** die zweite Stufe der Bildung der Aufschlämmung durch gleichzeitiges Einbringen von Alkalimetallsilicat und Ansäuerungsmittel bis zur Bildung von mindestens 1 bis 150 Gew.-Teilen $SiO_2$ auf 100 Gew.-Teile Träger durchgeführt wird.

14. Siliciumdioxidteilchen, umfassend eine Umhüllung aus aktivem Siliciumdioxid und einen Kern aus einem Träger aus einem Material außer Siliciumdioxid, erhalten nach einem Verfahren nach einem der vorstehenden Ansprüche, **dadurch gekennzeichnet, dass** sie eine Dicke der Umhüllung an Siliciumdioxid im Bereich von 2 bis 200 nm, bevorzugt im Bereich von 5 bis 50 nm, auf eine Kerngröße des Trägers im Bereich von 20 nm bis 30 μm, bevorzugt im Bereich von 50 nm bis 20 μm, besitzen.

15. Verbundteilchen nach Anspruch 14, **dadurch gekennzeichnet, dass** sie eine Dicke der Siliciumdioxidumhüllung von kleiner etwa 20 nm, bevorzugt kleiner etwa 10 nm, besitzen.

16. Verbundteilchen nach Anspruch 15, **dadurch gekennzeichnet, dass** sie eine Größe des Kerns des Trägers von größer etwa 10 μm, bevorzugt größer von etwa 15 μm, besitzen.

17. Verbundteilchen nach Anspruch 14, **dadurch gekennzeichnet, dass** sie aus einer Umhüllung aus dichtem gefälltem Siliciumdioxid und einem Kern aus einem festen kristallinen oder nicht-kristallinen, nicht-polymeren organischen Material mit biologischer, insbesondere phytosanitärer Aktivität, das in einem wässrigen Medium mit einem pH-Wert im Bereich von 8 bis 10 und bei einer Temperatur unter 100°C unlöslich ist, bestehen.

18. Verwendung der Verbundteilchen nach Anspruch 17 zur verzögerten Freisetzung des festen nicht-polymeren organischen Materials mit biologischer, insbesondere phytosanitärer Aktivität durch langsame Diffusion durch die Umhüllung aus Siliciumdioxid.

**Claims**

1. Method for preparing particles comprising a dense silica shell by precipitation of active silica from an aqueous alkali metal M silicate solution, with an $SiO_2/M_2O$ ratio of at least 2, preferably of the order of 2.5 to 4, with adjustment of the pH using an acidifying agent, on a support made of a material other than silica, separation of the silica slurry formed and drying of the silica suspension recovered, the operation of formation of silica slurry by precipitation being carried out according to the following stages:

   - a first stage consisting in employing an initial vessel heel with a pH of the order of 8 to 10 comprising water, at least one organic or inorganic support other than silica which is insoluble in water under the pH and temperature conditions of the slurry formation operation, an electrolyte salt from the group of alkali metals and optionally a buffer or basic agent, at a temperature of the order of 80 to 98°C;
   - a second stage consisting in introducing, into the said vessel heel, the alkali metal silicate in the form of an aqueous solution and the acidifying agent, the reaction mixture exhibiting a substantially constant pH of the order of 8 to 10 and being maintained at a temperature of the order of 80 to 98°C,
   until the desired amount of active silica has been formed,
   the said method being **characterized in that**:

   * the amount of electrolyte present in the said vessel heel in the first stage is at least approximately 0.4 mol, preferably of the order of 0.4 to 1.5 mol, of alkali metal ion per litre of vessel heel,

* the alkali metal silicate solution employed in the second stage comprises at least approximately 100 grams of $SiO_2$/litre, preferably of the order of 100 to 330 grams of $SiO_2$/litre,

* and **in that** the said second stage is carried out under conditions such that the kinetics K of formation of active silica, expressed in grams of silica/hour/gram of support, corresponds to a value

$$K \geq 3 \, (A/200) \, 2^n,$$

preferably $K \geq 4 \, (A/200) \, 2^n$

and very particularly $K \geq 6 \, (A/200) \, 2^n$

- $\underline{n}$ being equal to $(T-90)/10$
- $\underline{A}$ representing the specific surface, expressed in $m^2/g$, of the support to be coated
- and T the temperature in $°C$.

2. Method according to claim 1, **characterized in that** the alkali metal silicate is a sodium or potassium silicate.

3. Method according to claim 1 or 2, **characterized in that** the acidifying agent is an inorganic or organic acid.

4. Method according to claim 3, **characterized in that** the acidifying agent is sulphuric, nitric, hydrochloric, acetic, formic or carbonic acid.

5. Method according to claim 4, **characterized in that** the acidifying agent is gaseous $CO_2$ or sulphuric acid in the form of an aqueous solution exhibiting a concentration of the order of 60 to 400 g/l.

6. Method according to any one of the preceding claims, **characterized in that** the material constituting the support is chosen from solid inorganic metal salts, metal powders, solid metal oxides or hydroxides, natural or synthetic solid silicates, porous solid silicates comprising an active material which is stable and insoluble in water under the pH and temperature conditions of the slurry formation operation, solid organic polymers, or solid non-polymer organic materials, which may or may not be crystalline, possessing biological activity.

7. Method according to claim 6, **characterized in that** the material constituting the support is calcium carbonate or a solid non-polymer organic material, which may or may not be crystalline, possessing biological activity, in particular plant-protection activity.

8. Method according to any one of the preceding claims, **characterized in that** the material constituting the support has any shape and a size of the order of 20 nm to 30 μm, preferably of the order of 50 nm to 20 μm.

9. Method according to any one of the preceding claims, **characterized in that** the electrolyte is sodium sulphate, chloride, nitrate or hydrogencarbonate.

10. Method according to any one of the preceding claims, **characterized in that** the support is employed in the form of an aqueous dispersion.

11. Method according to any one of the preceding claims, **characterized in that** the amount of support which can be employed is such that the vessel heel formed contains of the order of at least 10% of its weight or of its volume of support.

12. Method according to claim 11, **characterized in that** the vessel heel contains up to 50% of its weight or of its volume of support.

13. Method according to any one of the preceding claims, **characterized in that** the second stage of slurry formation is carried out by simultaneous introduction of alkali metal silicate and of acidifying agent, until the formation of at least 1 to 150 parts by weight of $SiO_2$ per 100 parts by weight of support.

14. Silica particles comprising an active silica shell and a core composed of a support made of a material other than silica which are obtained according to the method forming the subject-matter of any one of the preceding claims, **characterized in that** they exhibit a silica shell thickness of the order of 2 to 200 nm, preferably of the order of 5 to 50 nm, for a support core size of the order of 20 nm to 30 μm, preferably of the order of 50 nm to 20 μm.

15. Composite particles according to claim 14, **characterized in that** they exhibit a silica shell thickness of less than approximately 20 nm, preferably of less than approximately 10 nm.

16. Composite particles according to claim 15, **characterized in that** they exhibit a support core size of greater than approximately 10 μm, preferably of greater than approximately 15 μm.

17. Composite particles according to claim 14, **characterized in that** they are composed of a precipitated dense silica shell and of a core made of a solid non-polymer organic material, which may or may not be crystalline, which possesses biological activity, in particular plant-protection activity, and which is insoluble in an aqueous medium with a pH of the order of 8 to 10 at a temperature of less than 100°C.

18. Use of the composite particles forming the subject-matter of claim 17 for the delayed release of the said solid non-polymer organic material possessing biological activity, in particular plant-protection activity, by slow diffusion through the silica shell.